# EUROPEAN PATENT APPLICATION

(11) **EP 1 855 341 A1**
(43) Date of publication of application: **14.11.2007**
(21) Application number: 06715180.3
(22) Date of filing: 03.03.2006
(51) Int. Cl.: H01M 8/04, H01M 8/06

(54) **FUEL CONTAINER FOR FUEL CELL**

(30) Priority: 04.03.2005 JP 2005060917
(71) Applicant: ZEON CORPORATION, Tokyo 100-8246 (JP)
(72) Inventor: OSHIMA, Masayoshi, yoda-ku, Tokyo, 1008246 (JP); HIROKAWA, Yoshitsugu, yoda-ku, Tokyo, 1008246 (JP)
(74) Representative: Vossius & Partner
(86) International application number: PCT/JP2006/304097
(87) International publication number: WO 2006/093270

(57) **Abstract**

A fuel container for fuel cells includes a container main body obtained by molding a resin material including a cycloolefin polymer resin into a shape which allows the container main body to store fuel, and an outlet provided in the container main body for supplying fuel to a fuel cell. The fuel container does not undergo erosion or swelling caused by a liquid organic compound such as an alcohol, and does not allow leakage of a liquid organic compound.

## Description

### TECHNICAL FIELD

The present invention relates to a fuel container for fuel cells which stores fuel such as methanol and supplies the fuel to a fuel cell.

### BACKGROUND ART

A fuel cell produces electric energy directly from chemical energy by electrochemically reacting fuel and oxygen to achieve highly efficient and environmentally friendly power generation. Therefore, the fuel cell has attracted attention as a power supply for small electronic instruments and the like, and has been extensively studied and developed.

A container which stores fuel (fuel container) is necessary for the fuel cell. Fuel cells are classified into a fuel cell using hydrogen as the fuel and a fuel cell using a liquid organic compound such as methanol or ethanol as the fuel. When using hydrogen, the container must endure high pressure in order to store hydrogen. Therefore, since the size and the weight of the container are increased, such a container is not suitable for portable applications. When using a liquid organic compound, since the liquid organic compound can be stored at a relatively low pressure, a container formed of a light resin material can be applied.

As the material for the fuel container, polyethylene, polypropylene, polyethylene naphthalate, polyethylene terephthalate, polyacrylonitrile, acrylonitrile-butadiene-styrene, polyamide, polyacetal, polycarbonate, polymethylpentene, and the like have been known (see patent documents 1 and 2).

However, a liquid organic compound such as methanol causes erosion or swelling of the resin material, for example. Moreover, the liquid organic compound can pass through and leak from the resin container.
[Patent document 1] JP-A-2004-281341
[Patent document 2] JP-A-2005-5155

The present invention has been achieved in view of the above-described problems of the related art. An object of the present invention is to provide a fuel container for fuel cells which does not undergo erosion or swelling caused by a liquid organic compound such as an alcohol and does not allow leakage of a liquid organic compound.

### DISCLOSURE OF THE INVENTION

The inventors of the present invention have conducted extensive studies in order to achieve the above object. As a result, the inventors have found that a fuel container for fuel cells, which includes a container main body obtained by molding a resin material including a cycloolefin polymer resin into a shape which allows the container main body to store fuel, and an outlet provided in the container main body for supplying fuel to a fuel cell, does not undergo erosion or swelling caused by a liquid organic compound such as an alcohol and does not allow leakage of a liquid organic compound. This finding has led to the completion of the present invention.

According to the present invention, a fuel container for fuel cells as defined in the following (1) to (5) is provided.
(1) A fuel container for fuel cells comprising a container main body obtained by molding a resin material including a cycloolefin polymer resin into a shape which allows the container main body to store fuel, and an outlet provided in the container main body for supplying fuel to a fuel cell.
(2) The fuel container according to (1), wherein the container main body is formed of a laminate including a layer of the cycloolefin polymer resin and a layer of another resin.
(3) The fuel container according to (1), wherein a surface portion of an inner surface or an outer surface of the container main body has a resin phase with a fluorine atom content higher than that of an inner portion of the container main body.
(4) The fuel container according to (3), wherein the container main body is obtained by molding the resin material including the cycloolefin polymer resin into a shape which allows the container main body to store fuel, and causing fluorine gas to contact an inner surface or an outer surface of the resulting molded product.
(5) The fuel container according to any one of (1) to (4), wherein the fuel is methanol.

### BRIEF DESCRIPTION OF THE DRAWINGS

FIG. 1 is a cross-sectional view showing one embodiment of a fuel container for fuel cells according to the present invention.
FIG. 2 is an oblique view showing one embodiment of a fuel container for fuel cells according to the present invention.
FIG. 3 is a cross-sectional view showing one embodiment of a fuel container for fuel cells according to the present invention.
FIG. 4 is a view showing an example of a fluorine gas treatment reactor.

### BEST MODE FOR CARRYING OUT THE INVENTION

A fuel container for fuel cells according to the present invention is described below in detail.
The fuel container for fuel cells according to the present invention includes a container main body obtained by molding a resin material including a cycloolefin polymer resin into a shape which allows the container main body to store fuel, and an outlet provided in the container main body for supplying fuel to a fuel cell.

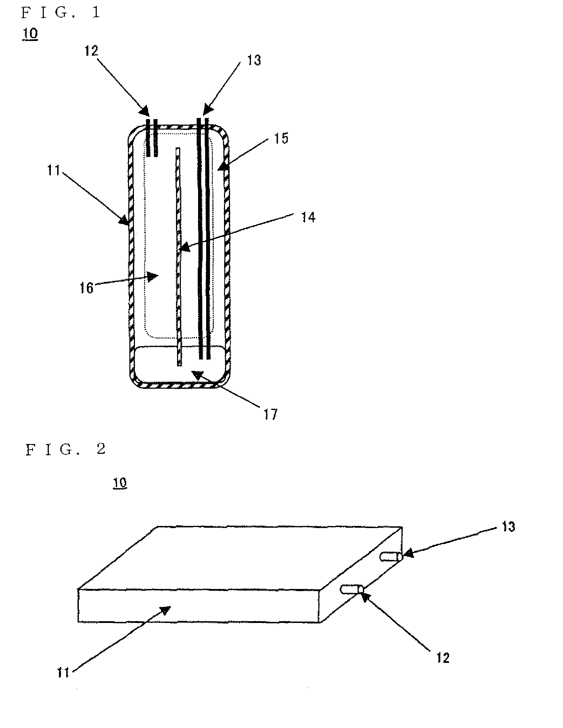

FIG. 1 is a cross-sectional view of a fuel container (10) according to one embodiment of the present invention, and FIG. 2 is an oblique view of the fuel container (10).

The fuel container (10) shown in FIGS. 1 and 2 includes a container main body (11) which stores fuel, an outlet (12) for supplying fuel to a fuel cell, and a fluid inlet (13) for allowing water produced by a fuel cell to be introduced and absorbed by an absorber (17). The outlet (12) and the fluid inlet (13) are provided with valves (not shown) so that the inside and the outside of the fuel container do not communicate when the fuel container is not attached to a fuel cell and the fuel container can communicate with a fuel cell when attached to a fuel cell.

In the fuel container shown in FIGS. 1 and 2, the container main body (11) is formed by molding a resin material including a cycloolefin polymer resin.

The term "including a cycloolefin polymer resin" used herein includes a case where the container main body of the fuel container according to the present invention is formed of one cycloolefin polymer resin, a case where the container main body of the fuel container according to the present invention is formed of two or more cycloolefin polymer resins, and a case where the container main body of the fuel container according to the present invention is formed of at least one cycloolefin polymer resin and at least one resin other than the cycloolefin polymer resin. The container main body (10) shown in FIG. 1 is preferably formed of one cycloolefin polymer resin or two or more cycloolefin polymer resins.

Examples of the cycloolefin polymer resin include a resin obtained by causing an alicyclic olefin to undergo addition polymerization or ring-opening polymerization; a resin obtained by causing an alicyclic olefin to undergo addition polymerization or ring-opening polymerization and hydrogenating the unsaturated bonds of the resulting polymer; a resin obtained by causing an aromatic vinyl compound to undergo addition polymerization and hydrogenating the aromatic rings of the resulting polymer; and the like.

Examples of the alicyclic olefin include norbornene monomers such as bicyclo[2.2.1]hept-2-ene (common name: norbornene) and its derivatives, tricyclo[4.3.0.1^{2,5}]deca-3,7-diene (common name: dicyclopentadiene), tricyclo[4.3.0.1^{2,5}]dec-3-ene, tricyclo[4.4.0.1^{2,5}]undeca-3,7-diene, tricyclo[4.4.0.1^{2,5}]undeca-3,8-diene, tricyclo[4.4.0.1^{2,5}]undec-3-ene, tetracyclo[7.4.0.1^{10,13}.0^{2,7}]trideca-2,4,6,11-tetraene (another name: 1,4-methano-1,4,4a,9a-tetrahydrofluorene), tetracyclo[8.4.0.1^{11,14}.0^{2,8}]tetradeca-3,5,7,12-tetraene (another name: 1,4-methano-1,4,4a,5,10,10a-hexahydroanthracene), and tetracyclo[4.4.0.1^{2,5}.1^{7,10}]dodec-3-ene (common name: tetracyclododecene) and its derivatives; monocyclic cycloalkenes such as cyclobutene, cyclopentene, cyclohexene, and 3,4-dimethyleyclopentene; alicyclic conjugated dienes such as cyclopentadiene and cyclohexadiene; vinyl alicyclic hydrocarbons including vinylcycloalkenes such as vinylcyclopentene, 2-methyl-4-vinylcyclopentene, and vinylcyclohexene and vinylcycloalkanes such as vinylcyclopentane, 2-methyl-4-vinylcyclopentane, vinylcyclohexane, and vinylcyclooctane; and the like.

Examples of the aromatic vinyl compound include styrene, alpha-methylstyrene, divinylbenzene, vinylnaphthalene, vinyltoluene, and the like.
The above alicyclic olefins and aromatic vinyl compounds may be used either individually or in combination of two or more.

Examples of typical cycloolefin polymer resins include norbornene polymers, monocyclic cycloalkene polymers, and vinylcycloalkane polymers.

Specific examples of the norbornene polymers include ring-opening polymers of norbornene monomers; addition polymers of norbornene monomers; addition polymers of norbornene monomers and olefins such as ethylene; and the like.

Specific examples of the monocyclic cycloalkene polymers include polymers obtained by causing monocyclic cycloalkene monomers or alicyclic conjugated diene monomers to undergo addition polymerization and optionally hydrogenating the unsaturated bonds of the resulting products.

Specific examples of the vinylcycloalkane polymers include polymers of vinylcycloalkanes and optional monomers copolymerizable with the vinylcycloalkanes; products obtained by hydrogenating the unsaturated bonds of polymers of vinylcycloalkenes and optional monomers copolymerizable with the vinylcycloalkenes (excluding vinylcycloalkanes); products obtained by hydrogenating the aromatic rings and the olefinic unsaturated bonds of polymers of aromatic vinyl compounds and optional monomers copolymerizable with the aromatic vinyl compounds; and the like.

Examples of the monomers copolymerizable with the above monomers include linear olefins such as ethylene, propylene, 1-butene, 1-pentene, 1-hexene, 3-methyl-1-butene, and 3-methyl-l-pentene; nonconjugated dienes such as 1,4-hexadiene, 4-methyl-1,4-hexadiene, 5-methyl-1,4-hexadiene, and 1,7-actadiene; and the like. These monomers may be used either individually or in combination of two or more.

The above cycloolefin polymer resin may include a polar group such as a hydroxyl group, a carboxyl group, an alkoxyl group, an epoxy group, a glycidyl group, an oxycarbonyl group, a carbonyl group, an amide group, an ester group, and an acid anhydride group. Note that the fuel permeation rate increases when the polar group content is too high. Therefore, it is preferable that the cycloolefin polymer resin have a low polar group content or not include the polar group.

As the cycloolefin polymer resin, the ring-opening polymers of norbornene monomers and hydrogenated products thereof and the products obtained by hydrogenating the aromatic rings and the olefinic unsaturated bonds of polymers of aromatic vinyl compounds and optional monomers copolymerizable with the aromatic vinyl compounds are preferred, with hydrogenated products of aromatic vinyl compound homopolymers or random block copolymers containing 50 wt% or more of aromatic vinyl compound units being more preferred. The hydrogenated products may be isotactic, syndiotactic, or atactic.

The polymerization method for the cycloolefin polymer resin and the method of optional hydrogenation are not particularly limited. Known methods may be employed.

Ring-opening polymerization may be carried out in a solvent at a temperature of -50°C to +100°C and a pressure (pressurization) of 0 to 5 MPa using a catalyst containing a halide, a nitrate, or an acetylacetone compound of a metal such as ruthenium, palladium, osmium, or platinum and a reducing agent or a catalyst containing a halide or an acetylacetone compound of a metal such as titanium, vanadium, zirconium, tungsten, or molybdenum and an organoaluminum compound (promoter) as a ring-opening polymerization catalyst.

Addition polymerization may be carried out at a temperature of -50°C to +100°C and a pressure (pressurization) of 0 to 5 MPa in the presence of a catalyst containing a titanium compound, a zirconium compound, or a vanadium compound and an organoaluminum compound (promoter), for example.
The alicyclic conjugated diene may be polymerized using a method disclosed in JP-A-6-136057 or JP-A-7-258318, for example.

The polymerization method for the aromatic vinyl compound, vinylcycloalkene, or vinylcycloalkane is not particularly limited. A radical polymerization method, an anionic polymerization method, or a cationic polymerization method may be used. Of these, an anionic polymerization method is preferred. The molecular weight of the resulting polymer tends to decrease when using a cationic polymerization method. When using a radical polymerization method, the mechanical strength of the resulting molded product tends to decrease due to a broad molecular weight distribution.

Anionic polymerization of the aromatic vinyl compound, vinyl cycloalkene, or vinylcycloalkane may be carried out in an organic solvent using an organic alkali metal such as n-butyllithium or 1,4-dilithiobutane as a polymerization catalyst.

Examples of the organic solvent include hydrocarbon solvents such as aliphatic hydrocarbons such as n-pentane, n-hexane, and isooctane; alicyclic hydrocarbons such as cyclopentane and cyclohexane; aromatic hydrocarbons such as benzene and toluene; and ethers such as tetrahydrofuran and dioxane.
The organic solvent is used so that the monomer concentration is usually 1 to 40 wt%, and preferably 10 to 30 wt%.

In order to obtain a polymer with a narrow molecular weight distribution to ensure mechanical strength and heat resistance, a Lewis base such as dibutyl ether or triethylamine may be added to the reaction system.

The reaction temperature of anionic polymerization is usually -70 to + 150°C, and preferably -50 to +120°C. The reaction time is usually 0.01 to 20 hours, and preferably 0.1 to 10 hours.
The polymerization method may be suspension polymerization, solution polymerization, or bulk polymerization.

The polymerization conversion rate of the cycloolefin polymer resin is usually 95 wt% or more, preferably 97 wt% or more, and more preferably 99 wt% or more. A container which releases only a small amount of organic substance can be obtained by increasing the polymerization conversion rate.

A hydrogenated cycloolefin polymer resin may be obtained by hydrogenating the carbon-carbon unsaturated bonds in the ring, the main chain, and the side chain after the polymerization reaction. A cycloolefin polymer resin exhibiting excellent heat resistance can be obtained by hydrogenation.

The percentage of the number of carbon-carbon double bonds in the hydrogenated cycloolefin polymer resin with respect to the total number of carbon-carbon bonds is usually 0.15 mol% or less, preferably 0.07 mol% or less, and more preferably 0.02 mol% or less.

The hydrogenation reaction may be carried out while optimally setting the reaction temperature, the hydrogen partial pressure, the reaction time, and the reaction solution concentration depending on the type of polymer to be hydrogenated. For example, the hydrogenation reaction may be carried out at a reaction temperature of 25 to 300°C and a hydrogen partial pressure of 0.5 to 10 MPa for a reaction time of 0.5 to 20 hours using a hydrogenation catalyst in an amount of 0.01 to 50 parts by weight per 100 parts by weight of the polymer.

The hydrogenation catalyst is not particularly limited. A known hydrogenation catalyst may be used. It is preferable to use a homogeneous catalyst containing a compound of a metal such as nickel or cobalt and an organoaluminum compound or an organiolithium compound. A carrier such as activated charcoal, diatomite, or magnesia may be used, if necessary.

The cycloolefin polymer resin may be isolated by filtering the reaction solution to remove the catalyst, and removing the solvent and the like from the filtrate.

As the method of removing the solvent and the like, a coagulation method, a direct drying method, and the like can be given.
In the coagulation method, a polymer solution is mixed with a poor solvent for the polymer to precipitate the polymer.
Examples of the poor solvent include polar solvents such as alcohols such as ethanol, n-propanol, and isopropanol; ketones such as acetone and methyl ethyl ketone; and esters such as ethyl acetate and butyl acetate.
After causing a solid-liquid separation to occur by coagulation, the resulting small polymer crumb is heated and dried to remove the solvent.

In the direct drying method, a solvent is removed by heating a polymer solution under reduced pressure. This method may be carried out using a centrifugal thin-film continuous vaporization dryer, a surface-scraping heat-exchange continuous reactor dryer, a high-viscosity reactor, or the like.
The degree of vacuum and the temperature may be appropriately selected depending on the device.

The molecular weight of the cycloolefin polymer resin used in the present invention is not particularly limited. When the resin is a block copolymer, the weight average molecular weight (Mw) of the block copolymer is usually 50,000 to 300,000, preferably 55,000 to 200,000, and particularly preferably 60,000 to 150,000.

When the resin is a random copolymer or a homopolymer, the weight average molecular weight (Mw) of the random copolymer or the homopolymer is usually 5000 to 500,000, and preferably 10,000 to 200,000. If the weight average molecular weight (Mw) is too low, mechanical strength may become insufficient. If the weight average molecular weight (Mw) is too high, the polymer tends to undergo thermal decomposition due to an increased molding time, whereby the amount of organic substance released tends to be increased.

The molecular weight distribution of the resin indicated by the ratio (Mw/Mn) of the weight average molecular weight (Mw) to the number average molecular weight (Mn) is usually 2.0 or less, preferably 1.5 or less, and more preferably 1.2 or less. If the ratio (Mw/Mn) is within this range, mechanical strength and heat resistance are highly balanced.
Note that the weight average molecular weight (Mw) and the number average molecular weight (Mn) are polystyrene-reduced molecular weights measured by gel permeation chromatography (GPC) using cyclohexane as a solvent (or toluene when the resin is not dissolved in cyclohexane).

The glass transition temperature of the cycloolefin polymer resin is preferably 60 to 200°C, more preferably 70 to 180°C, and most preferably 90 to 170°C. If the glass transition temperature is too low, heat resistance tends to be decreased. If the glass transition temperature is too high, processability tends to deteriorate. The term "glass transition temperature" used herein refers to a value measured using a differential scanning calorimeter. The glass transition temperature may be adjusted by appropriately selecting the monomer and the like.

The cycloolefin polymer resin used in the present invention has a low permeability of a liquid organic compound (e.g. methanol) used as fuel for fuel cells. The methanol permeability of the cycloolefin polymer resin used in the present invention is preferably 6 g/m²·24 hr·atm or less, more preferably 5 g/m²·24 hr·atm or less, and still more preferably 3 g/m²·24 hr·atm or less. The methanol permeability may be measured in accordance with JIS K 7126 A using a known methanol permeability measuring device.

The molding method for the container main body of the fuel container according to the present invention is not particularly limited. A container with a desired shape may be formed using a molding method such as an injection molding method or a blow molding method. The container main body may be formed by separately molding each portion of the container main body and bonding each portion by ultrasonic wave welding or the like.

In the fuel container according to the present invention, the shape of the container main body is not particularly limited. The shape of the container main body may be a rectangular parallelepiped, a cube, a cylinder, a polygonal pillar, or the like. For example, the container main body (11) of the fuel container (10) shown in FIGS. 1 and 2 is approximately in the shape of a thin rectangular parallelepiped.

In the fuel container according to the present invention, a spacer may be provided inside the container main body in order to prevent the container from being crushed due to external pressure or expanding due to internal pressure. As shown in FIG. 1, a spacer (14) having a structure which connects the inner surfaces of the container may be disposed inside the container main body (11), for example.

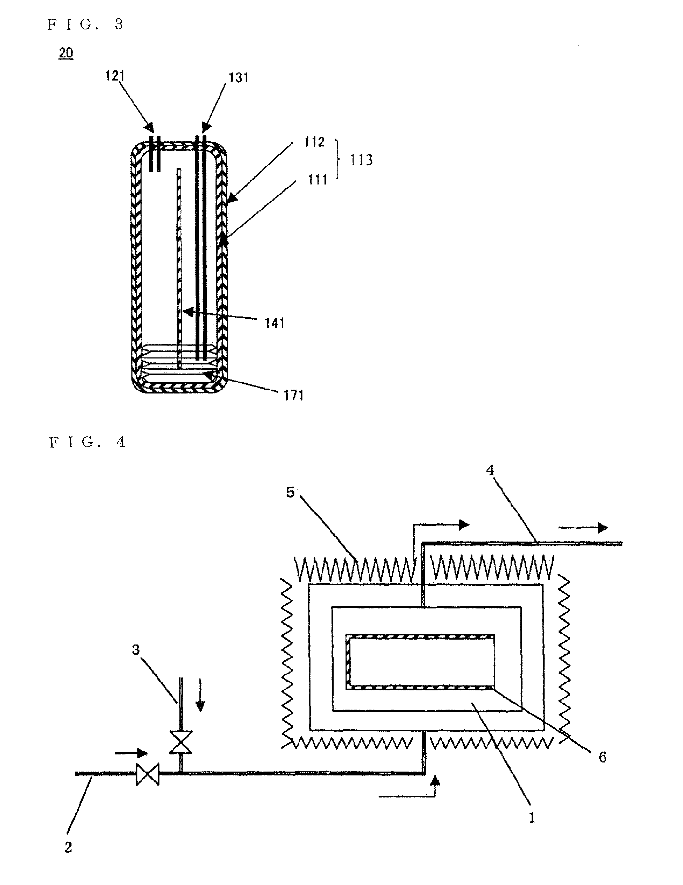

The container main body of the fuel container according to the present invention may have a single-layer structure, as shown in FIG. 1. It is preferable that the container main body have a multilayer structure in the same manner as a container main body (113) of a fuel container (20) shown in FIG. 3.

The fuel container (20) shown in FIG. 3 includes a container main body (113) which stores fuel, an outlet (121) for supplying fuel to a fuel cell, and a fluid inlet (131) for allowing water produced by a fuel cell to be introduced and absorbed by an absorber (171). A spacer (141) similar to that of the fuel container (10) shown in FIG. 1 is disposed inside the container main body (113).

The container main body (113) of the fuel container (20) shown in FIG. 3 has a structure in which a layer of the cycloolefin polymer resin and a layer of another resin are stacked. Specifically, an inner layer {111} of the container main body (113) is formed of a cycloolefin polymer resin, and an outer layer (112) is formed of another resin.

Examples of the other resin which may be stacked include polyethylene, polypropylene, polyethylene naphthalate, polyethylene terephthalate, polyacrylonitrile, acrylonitrile-butadiene-styrene, polyamide, polyacetal, polycarbonate, polymethylpentene, and the like.

It is also preferable that the container main body of the fuel container according to the present invention have a three-layer structure in which an outer layer and an inner layer are formed of other resins on either side of an intermediate layer formed of the cycloolefin polymer resin (not shown). When the container main body has a three-layer structure, it is preferable that the inner layer resin be a resin exhibiting excellent resistance to a high-viscosity liquid and the outer layer resin be a resin exhibiting excellent pressure resistance and impact resistance.

In the fuel container according to the present invention, it is more preferable that the surface portion of the inner surface or the outer surface (preferably the inner surface) of the container main body have a resin phase with a fluorine atom content higher than that of the inner portion of the container main body irrespective of whether the container main body has a single-layer structure or a multilayer structure.

The term "surface portion of the container main body" used herein refers to a portion with a depth of about several nanometers to several hundred micrometers from the outermost surface of the container. The inner portion and the surface portion are formed of the same type of resin without a layer interface formed in between, and the surface portion has a fluorine atom content higher than that of the inner portion. The fluorine atom content may be determined using an analytical device such as an electron spectroscopy for chemical analysis (ESCA) device. The fluorine atom content may be distributed so that the fluorine atom content gradually decreases from the surface portion toward the inner portion, or may be distributed so that the fluorine atom content decreases stepwise from the surface portion toward the inner portion.

The method of forming a container main body of which the surface portion of the inner surface or the outer surface (preferably the inner surface) has a resin phase with a fluorine atom content higher than that of the inner portion is not particularly limited. It is preferable to use a method of causing fluorine gas to contact the inner surface or the outer surface of a molded product obtained by molding a resin material including the cycloolefin polymer resin into a shape which allows the container main body to store fuel (hereinafter may be called "resin container main body").

Note that the dimensions of the molded product change to a small extent when introducing fluorine atoms by causing fluorine gas to contact the inner surface or the outer surface of the resin container main body. Therefore, it is preferable to form a molded product with dimensions and a shape so that the desired container main body is obtained taking the amount of change in dimensions into consideration.

When causing fluorine gas to contact the inner surface or the outer surface of the resin container main body, the container main body may be masked in order to allow only the inner surface of the container to contact a fluorine gas-containing atmosphere.

A reactor shown in FIG. 4 may be used when causing fluorine gas to contact the inner surface or the outer surface of the resin container main body, for example.

The reactor shown in FIG. 4 includes a chamber (1) and a heating device (5) for controlling the temperature of the chamber (1). A fluorine gas supply line (2) and an inert gas supply line (3) for respectively introducing fluorine gas and inert gas are connected with the chamber (1).

The chamber (1) is preferably formed of stainless steel or aluminum. The chamber (1) is provided with a space for placing the resin container main body, in which resin container main bodies with various shapes can be placed for contact with fluorine gas.

An exhaust line (4) for removing unnecessary gas is also connected with the chamber (1). The gas removed through the exhaust line (4) may be recycled by returning the gas to the respective gas supply lines either directly or after separation and purification.

An operation of causing fluorine gas to contact the inner surface or the outer surface of the resin container main body (hereinafter may be abbreviated as "container surface") using the reactor shown in FIG. 4 is described below in detail. This operation may be carried out by the following steps (A) to (C).

### (A) A step of allowing resin container main body to stand in inert gas or under reduced pressure

Although the step (A) need not be carried out always, it is preferable to carry out the step (A). This step allows a resin phase with a high fluorine atom content to be formed in the surface portion of the container without causing an in-plane distribution.

In the step (A), the resin container main body is placed in the chamber (1). After sealing the chamber (1), inert gas is introduced into the chamber by opening the valve of the inert gas supply line {3}. Examples of the inert gas include argon, nitrogen, helium, neon, krypton, xenon, and the like. Of these, argon is preferred.

It is preferable to heat the resin container main body in the chamber (1) using the heating device after filling the chamber (1) with inert gas. This heating efficiently removes water, oxygen, and volatile components contained in the resin container main body.
The heating temperature is usually 60 to 180°C, and preferably 80 to 130°C in terms of the surface temperature of the resin container main body. The heating time is usually 1 to 360 minutes, and preferably 2 to 200 minutes.

The pressure inside the chamber (1) may be reduced instead of introducing inert gas. When reducing the pressure inside the chamber (1), the pressure is adjusted to usually 6.65×10⁴ Pa (500 mmHg) or less, and preferably 1.33×10⁴ Pa (100 mmHg) or less. The lower limit of the pressure is 1.33×10² Pa (1 mmHg). If the pressure is reduced to a large extent, contaminants such as oil and water may be reversely diffused from the exhaust system.

It is also preferable to heat the resin container main body when reducing the pressure. The heating temperature is usually 15 to 100°C. It is preferable to inject high-purity inert gas while reducing the pressure inside the chamber (1), since oxygen and water can be efficiently removed. The decompression time is usually 1 to 360 minutes, and preferably 2 to 200 minutes. The surface of the container is easily hydrophilized if oxygen and water exist in the container main body in the subsequent step (B). In order to make the surface of the container hydrophobic, the amounts of oxygen and water in the container main body are usually adjusted to 1 wt% or less, preferably 100 ppm by weight or less, and more preferably 10 ppm by weight or less.

### (B) A step of causing container surface to contact fluorine gas-containing atmosphere

After the step (A), the valve of the inert gas supply line (3) is closed, and the inside of the chamber (1) is cooled, if necessary. The valve of the fluorine gas supply line (2) and optionally the valve of the inert gas supply line (3) are opened to introduce the fluorine gas into the chamber (1), whereby the chamber (1) is provided with a fluorine gas-containing atmosphere.

The term "fluorine gas-containing atmosphere" refers to an atmosphere containing only fluorine gas and an atmosphere in which fluorine gas is diluted with inert gas. Note that an atmosphere in which fluorine gas is diluted with inert gas is preferred in order to ensure a moderate reaction.

The concentration of fluorine gas diluted with inert gas is usually 0.1 to 50 wt%, preferably 0.1 to 30 wt%, and more preferably 0.1 to 20 wt%.

It is preferable that the fluorine gas-containing atmosphere not contain oxygen and water in order to obtain a container with a hydrophobic surface. Specifically, it is preferable that the amounts of oxygen and water be 100 ppm by weight or less, more preferably 10 ppm by weight or less, and particularly preferably 1 ppm by weight or less.

The fluorine gas is diffused into the surface portion and the inner portion of the container from the container surface by causing the container surface to contact the fluorine gas-containing atmosphere. As a result, fluorine atoms are introduced into the resin, whereby the fluorine atom content in the resin forming the container main body is increased. The penetration depth of fluorine atoms from the inner surface or the outer surface of the container main body and the fluorine atom content vary depending on the fluorine gas concentration, the contact temperature, and the contact time.

The temperature of the surface of the resin container main body when causing the surface to contact the fluorine gas-containing atmosphere is usually -50 to +150°C, preferably -20 to +80°C, and particularly preferably 0 to 50°C, although the temperature is not particularly limited.

The contact time is usually 0.1 second to 600 minutes, preferably 0.5 seconds to 300 minutes, and more preferably 1 second to 200 minutes. The higher the fluorine gas concentration, or the higher the contact temperature, or the longer the contact time, the larger the penetration depth of fluorine atoms and the higher the fluorine atom content.

Since the refractive index of the portion (mainly the surface portion of the container) into which fluorine atoms are introduced decreases as the fluorine atom content increases, the refractive index can be controlled to a desired value by appropriately selecting the fluorine gas concentration, the contact temperature, and the contact time. In order to reduce the reflectance, it is preferable to adjust the difference between the refractive index of the surface portion (outermost surface: portion with the highest fluorine atom content) and the refractive index of the inner portion (portion with a fluorine atom content of zero) to 0.001 or more, and preferably 0.01 or more.

The resin forming the container main body deteriorates when the fluorine gas concentration is extremely high, or when the contact temperature is extremely high and the contact time is long. Therefore, it is preferable to cause the container main body to contact the fluorine gas at the above-mentioned concentration and temperature for the above-mentioned period of time.

### (C) A step of allowing container main body subjected to step (B) to stand in inert gas or under reduced pressure after contact with fluorine gas

Although the step (C) need not be carried out always, it is preferable to carry out the step (C). This step allows a resin phase with a high fluorine atom content to be formed in the surface portion of the container without causing an in-plane distribution.

When a specific period of time has elapsed after contact with fluorine gas, the chamber (1) is filled with inert gas by opening the valve of the inert gas supply line (3) and closing the valve of the fluorine gas supply line (2). As the inert gas, the inert gas described for the step (A) can be given.

It is preferable to heat the container main body using the heating device.
This allows removal of unnecessary fluorine gas which is not introduced into the container main body. The heating temperature is usually 60 to 180°C, and preferably 80 to 130°C in terms of the surface temperature of the container main body. The heating time is usually 1 to 360 minutes, and preferably 2 to 200 minutes.

The pressure inside the chamber (1) may be reduced instead of introducing inert gas. When reducing the pressure inside the chamber (1), the pressure is adjusted to usually 6.65×10⁴ Pa (500 mmHg) or less, and preferably 1.33×10⁴ Pa (100 mmHg) or less. The lower limit of the pressure is 1.33×10² Pa (1 mmHg). If the pressure is reduced to a large extent, contaminants such as oil and water may be reversely diffused from the exhaust system.

It is also preferable to heat the resin container main body when reducing the pressure. The heating temperature is usually 15 to 100°C. It is preferable to inject a high-purity inert gas while reducing pressure in order to achieve efficient removal of fluorine gas. The decompression time is usually 1 to 360 minutes, and preferably 2 to 200 minutes.

After completion of the step (C), the container is removed from the chamber (1).
A container main body can be thus obtained of which the surface portion of the inner surface or the outer surface (preferably the inner surface) has a resin phase with a fluorine atom content higher than that of the inner portion of the container main body.

The fuel stored in the fuel container is supplied to a fuel cell through the outlet (12) provided in the container main body (10), as shown in FIG. 1, for example.

The fuel may be supplied through the outlet by a gravity method, a suction method, an injection method, or the like.
When using the injection method, an injection material (compressed fluid) is injected into the fuel container together with the fuel and accommodated in a pressurized state. The outlet is opened when attached to a fuel cell to communicate with the fuel cell, whereby the fuel is supplied to the fuel cell.

As an example of another supply method, a fluid introducing means for introducing another fluid into the container main body corresponding to the outflow of the fuel through the outlet, and water or carbon dioxide produced by the fuel cell may be introduced into the fuel container so that the fuel is discharged due to introduction of the fluid.

Or, an absorber which absorbs a fluid such as water and carbon dioxide may be disposed in the fuel container, and the capacity of the container may be reduced by allowing the absorber to swell inside the fuel container depending on the amount of fluid (water produced by the fuel cell) which is supplied through the fluid inlet and absorbed by the absorber to discharge the fuel, for example. The material for the absorber is not particularly limited insofar as the material swells by absorbing a fluid. As examples of the material for the absorber, pulp, fibers, fabrics, and the like can be given.

In the fuel container (10) shown in FIG. 1, the absorber swells by absorbing water introduced through the fluid inlet (13) to pressurize a high-viscosity liquid (15) so that fuel (16) is caused to flow toward the outlet (12) where the high-viscosity liquid (15) does not exist, whereby the fuel (16) is discharged through the outlet (12) of the container main body (11) and supplied to the fuel cell. As the water introduced through the fluid inlet (13), water produced by the fuel cell may be used.

The fuel may be discharged using a bellows pump (171) instead of the absorber (17) as in the fuel container (20) shown in FIG. 3.

The fuel stored in the fuel container according to the present invention is usually a mixture of a chemical fuel and water. As the chemical fuel, a compound containing a hydrogen atom such as methanol or ethanol may be applied. Specific examples of the fuel include methanol, a mixture of methanol and pure water, ethanol, a mixture of ethanol and pure water, and the like. In the fuel container (10) shown in FIGS. 1 and 2, a mixture in which methanol and water are uniformly mixed in an equimolar ratio is used as the fuel (16).

In the fuel container according to the present invention, it is preferable that the high-viscosity liquid (15) be provided inside the container main body (11) to completely cover the liquid surface of the fuel (16), as shown in FIG. 1, for example. The fuel (16) can be hermetically enclosed in the container main body (11) by the inner surface of the container main body (11) (excluding the outlet) and the high-viscosity liquid (15).

The fuel (16) and the high-viscosity liquid (15) are separated without mixing due to aqueous properties and oily properties. The fuel (16) is stored in the container main body in a state in which the fuel (16) is hermetically enclosed by the inner wall of the container main body (11) and the high-viscosity liquid (15). Gases such as air present at the interface between the fuel (16) and the high-viscosity liquid (15) or mixed into the fuel are sucked out and removed in advance using a vacuum deaerator or the like so that almost no bubbles are present at the interface between the fuel (16) and the high-viscosity liquid (15) or contained in the fuel (16).

As the high-viscosity liquid, a liquid with a viscosity higher than that of the fuel is used. Specific examples of the high-viscosity liquid include mineral oils such as spindle oil and silicone oils such as dimethyl silicone oil and methylphenyl silicone oil. It is preferable that the high-viscosity liquid be insoluble or scarcely soluble in the fuel. The high-viscosity liquid may be colored with a coloring material such as a pigment or a dye.

The fuel cell to which the fuel is supplied from the fuel container according to the present invention is not particularly limited. Preferred examples of the fuel cell include fuel cells which can be installed in small electronic instruments such as a polymer electrolyte fuel cell (PEFC) and a direct methanol fuel cell (DMFC).

A fuel cell is operated as follows by supplying fuel to the fuel cell using the fuel container according to the present invention.
For example, when storing fuel for fuel cells containing methanol and water in the fuel container for fuel cells according to the present invention and supplying the fuel to a fuel cell stack of a methanol reforming polymer electrolyte fuel cell (PEFC), the outlet of the fuel container according to the present invention is coupled with a reformer which produces hydrogen. In the reformer, methanol and water are reformed into hydrogen gas and carbon dioxide. The resulting hydrogen gas is supplied to a fuel electrode of the fuel cell. When the hydrogen gas is supplied to the fuel electrode, hydrogen ions and electrons are produced by catalytic reaction, and the electrons are removed. The hydrogen ions produced move toward an air electrode through a polymer electrolyte membrane, and oxygen gas and electrons react at the air electrode to produce water. The water produced is discharged to the outside of the fuel cell. For example, the water produced may be introduced through the fluid inlet (13) and absorbed by the absorber (17), as shown in FIG. 1. Electric energy is generated by the above electrochemical reactions.

When storing fuel for fuel cells containing methanol and water in the fuel container for fuel cells according to the present invention and supplying the fuel to a fuel cell stack of a direct methanol fuel cell (DMFC), the outlet of the fuel container according to the present invention is coupled with a fuel electrode of the fuel cell stack. Methanol and water react at the fuel electrode through catalytic reaction to produce carbon dioxide, hydrogen ions, and electrons, and the electrons are removed. The hydrogen ions produced move toward an air electrode through a polymer electrolyte membrane, and oxygen gas and electrons react at the air electrode to produce water.
The water produced may be introduced into the fuel container (10) through the fluid inlet (13) and absorbed by the absorber (17) in the same manner as in the case of operating the PEFC. Electric energy is generated by the above electrochemical reactions.

### EXAMPLES

The present invention is described below in more detail by way of examples. Note that the present invention is not limited to the following examples.

### (Example 1)

A cycloolefin polymer resin (Zeonex 480R, manufactured by Zeon Corporation) was molded to obtain a container base material with a shape shown in FIG. 1. After placing the container base material in a chamber made of 316L stainless steel, the container base material was heated at 120°C for three hours under a high-purity argon stream with a content of oxygen and water of 1 ppb by weight or less to remove oxygen and water to a concentration of less than 10 ppm by weight. After cooling the container base material to room temperature, 1 wt% fluorine gas (content of oxygen and water: less than 1 ppm by weight) diluted with argon gas was introduced at 30°C by switching the valves while preventing oxygen and water in the air from being mixed. After 10 minutes, high-purity argon with a content of oxygen and water of 1 ppb by weight or less was introduced by switching the valves. The container base material was heated at 120°C for one hour to remove unnecessary fluorine gas.

The surface of the container base material treated with the fluorine gas was measured by ESCA to confirm that a large number of fluorine atoms were present in the surface portion. After immersing the container base material in ultrapure water for 24 hours, the container base material was measured by ESCA. A large number of fluorine atoms were present in the surface portion in the same manner as in the measurement before immersion. When the surface of the film was measured using an FTIR-AIR method, broad peaks attributed to C-F stretching vibrations were observed at 1400 to 1000 cm⁻¹.

The container was hermetically provided with fuel for fuel cells containing methanol and water. The container was allowed to stand in a thermostat-controlled bath at 50°C for one month. The container remained transparent, and leakage of the fuel was not observed.

The cycloolefin polymer resin (Zeonex 480R, manufactured by Zeon Corporation) used to produce the container was extrusion-molded to form a film with a thickness of 40 micrometers.
The methanol permeability of the film was measured in accordance with JIS K 7126 A using a methanol permeability measuring device (GTR-VOC, manufactured by GTR TEC Corporation). The film had a methanol permeability of 1.9 g/m²·24 hr·atm.

### (Example 2)

A container was obtained in the same manner as in Example 1 except that a cycloolefin polymer resin (inner layer) and a polypropylene resin (outer layer) were molded in layers to obtain a container base material with a shape shown in FIG. 3. The container was hermetically provided with fuel for fuel cells containing methanol and water. The container was allowed to stand in a thermostat-controlled bath at 50°C for one month. The container remained transparent, and leakage of the fuel was not observed. The container was not discolored or did not produce cracks even if sebum oil or the like was attached to the container.

### (Comparative Example 1)

A fuel container was obtained in the same manner as in Example 1 except for using a polycarbonate resin instead of the cycloolefin polymer resin. The container was hermetically provided with fuel for fuel cells and was allowed to stand in a thermostat-controlled bath at 50°C for one month. The container became white and produced minute cracks. Leakage of a small amount of fuel was observed.

### (Comparative Example 2)

A container was formed using a biaxially-stretched polypropylene film (manufactured by Toyobo Co., Ltd., thickness: 40 micrometers) and hermetically provided with fuel for fuel cells. The container was allowed to stand in a thermostat-controlled bath at 50°C for one month in the same manner as in Example 1. The container remained transparent, and leakage of the fuel was not observed.
The methanol permeability of the biaxially-stretched polypropylene film was measured in the same manner as in Example 1. The biaxially-stretched polypropylene film had a methanol permeability of 9.8 g/m²·24 hr·atm, which is five times the methanol permeability of the resin used in Example 1.

As is clear from Example 1 and Comparative Example 2, the film formed of the cycloolefin polymer resin has an extremely low methanol permeability. Therefore, the cycloolefin polymer resin can be effectively used as the material for internal parts of fuel cells coming in contact with an alcohol such as a regulator, a pump, a sensor, a separator, a pipe, and a joint in addition to the fuel container for fuel cells.

### INDUSTRIAL APPLICABILITY

Since the fuel container for fuel cells according to the present invention does not allow leakage of fuel stored therein, the fuel container can be safely handled even when applied to portable instruments.
Moreover, fuel can be stably supplied to fuel cells using the fuel container for fuel cells according to the present invention.

## Claims

1. A fuel container for fuel cells comprising a container main body obtained by molding a resin material including a cycloolefin polymer resin into a shape which allows the container main body to store fuel, and an outlet provided in the container main body for supplying fuel to a fuel cell.

2. The fuel container according to claim 1, wherein the container main body is formed of a laminate including a layer of the cycloolefin polymer resin and a layer of another resin.

3. The fuel container according to claim 1, wherein a surface portion of an inner surface or an outer surface of the container main body has a resin phase with a fluorine atom content higher than that of an inner portion of the container main body.

4. The fuel container according to claim 3, wherein the container main body is obtained by molding the resin material including the cycloolefin polymer resin into a shape which allows the container main body to store fuel, and causing fluorine gas to contact an inner surface or an outer surface of the resulting molded product.

5. The fuel container according to any one of claims 1 to 4, wherein the fuel is methanol.
